Europäisches Patentamt

European Patent Office

Office européen des brevets

(11) Veröffentlichungsnummer: **0 250 617**
**B1**

(12) **EUROPÄISCHE PATENTSCHRIFT**

(45) Veröffentlichungstag der Patentschrift:
**09.08.89**

(51) Int. Cl.⁴: **C05F 9/02**

(21) Anmeldenummer: **86108660.1**

(22) Anmeldetag: **25.06.86**

(54) Einrichtung zum Umsetzen von Müll auf einem Kompostierfeld.

(43) Veröffentlichungstag der Anmeldung:
07.01.88 Patentblatt 88/1

(45) Bekanntmachung des Hinweises auf die Patenterteilung:
09.08.89 Patentblatt 89/32

(84) Benannte Vertragsstaaten:
BE CH DE FR GB IT LI LU NL SE

(56) Entgegenhaltungen:
EP-A- 0 060 410
FR-A- 1 527 822
FR-A- 2 320 922
US-A- 3 276 845
US-A- 3 294 491
US-A- 3 438 740

(73) Patentinhaber: Vogel, Werner, Bäumlegasse 9,
A-6923 Lauterach(AT)
Patentinhaber: Müller, Peter, Bäumlegasse 9,
A-6923 Lauterach(AT)
Patentinhaber: Häusle, Christian, Dammstrasse 41,
A-6850 Dornbirn(AT)
Patentinhaber: Häusle, Thomas, Mag., Dammstrasse 41,
A-6850 Dornbirn(AT)
Patentinhaber: Häusle, Hubert, Dammstrasse 41,
A-6850 Dornbirn(AT)

(72) Erfinder: Vogel, Werner, Bäumlegasse 9,
A-6923 Lauterach(AT)
Erfinder: Müller, Peter, Bäumlegasse 9,
A-6923 Lauterach(AT)
Erfinder: Häusle, Hubert, verstorben(AT)

(74) Vertreter: Hefel, Herbert, Dipl.-Ing., Egelseestrasse 65a
Postfach 61, A-6800 Feldkirch(AT)

**Beschreibung**

Die Erfindung betrifft eine Einrichtung zum Umsetzen von Müll auf einem Kompostierfeld, bei der Müll an der Eintrittsseite abgeladen und fortschreitend bis zur Austrittsseite des Kompostierfeldes umgesetzt wird, bestehend aus einer auf Schienen verfahrbaren Brücke und einer auf der Brücke verfahrbaren Laufkatze, welche wenigstens ein Grab- und Förderrad und ein Förderband trägt.

Es sind bereits Maschinen zum Umsetzen und Belüften von Müll auf einem Kompostierfeld bekannt geworden, bei welcher an einem verfahrbaren Katzwagen ein Förderrad gelagert ist, wobei ein Absetz-Transportband sich durch die Zentrumsöffnung des Förderrades erstreckt. Das Förderrad ist mit horizontaler Achse, jedoch mit spitzem Winkel zur Fahrrichtung des Katzwagens angeordnet. Eine solche Konstruktion ist sehr aufwendig, zumal die Lagerung des Förderrades nicht in dessen Zentrum erfolgen kann. Außerdem ergibt sich durch diese Schrägstellung der Nachteil, daß praktisch nur eine Arbeitsrichtung gegeben ist infolge des Anstellwinkels des Förderrades.

Bei einer weiteren bekannten Anordnung zum Umsetzen von Müll auf einem Kompostierfeld können auch zwei Förderräder vorgesehen werden, wobei diese Förderräder jedoch von sich aus den Weitertransport des Mülls besorgen müssen, das heißt, es muß eine entsprechende Drehzahl dieser Förderräder gegeben sein um eine größere Auswurfweite zu erreichen.

Die vorliegende Erfindung hat sich zur Aufgabe gestellt, eine Einrichtung der eingangs genannten Art zu schaffen, die besonders leistungsfähig ist, nach beiden Fahrrichtungen der Laufkatze hin gleichermaßen wirksam ist und außerdem in einfacher Weise auch ohne Durchführung von Umsetzarbeiten über dem Kompostierfeld oder über mehrere Kompostierfelder verfahrbar ist.

Erfindungsgemäß wird dazu vorgeschlagen, daß zwei Grab- und Förderräder mit Abstand zueinander gleichachsig angeordnet sind, welche in Achsrichtung gegeneinander gerichtete Austrittsöffnungen aufweisen, daß im Bereich zwischen den beiden Grab- und Förderrädern ein Förderband eingreift, und daß sowohl die Grab- und Förderräder als auch das Förderband höhenverstellbar an der auf der Brücke verfahrbaren Laufkatze gehalten sind.

Durch diese erfindungsgemäßen Maßnahmen wird beim Verfahren der Laufkatze nach beiden Richtungen hin ein optimales Abarbeiten und ein optimales Umsetzen des Mülls erreicht. Durch das jeweils in Vorschubrichtung der Laufkatze vorne liegende Grab- und Förderrad wird der Großteil des Mülls abgearbeitet, wobei das zweite, folgende Grab- und Förderrad den restlichen Bereich der abzuarbeitenden Müllhalde aufnimmt. Bei der umgekehrten Fahrtrichtung ist dann das andere Grab- und Förderrad der Hauptzubringer zu dem zwischen den beiden Grab- und Förderrädern angeordneten Förderband. Durch die Anordnung des Förderbandes zwischen den beiden Grab- und Förderrädern ist eine konstruktiv einfache Lagerung derselben möglich und außerdem ein günstiger Abtransport des abgearbeiteten Mülls an die gewünschte neue Ablagerungsstelle.

Durch die Möglichkeit, sowohl die Grab- und Förderräder als auch das Förderband in ihrer Höhenlage zu verstellen, besteht die Möglichkeit, daß an jeder beliebigen Stelle die genannten Teile angehoben werden können, damit die Brücke samt der Laufkatze oder die Laufkatze allein beliebig über dem Kompostierfeld verfahren werden kann, wobei außerdem die Möglichkeit geschaffen wird, daß sich die Laufkatze samt den Grab- und Förderrädern und dem Förderband auf ein benachbartes Kompostierfeld bewegen kann.

Weitere erfindungsgemäße Merkmale und besondere Vorteile werden in der nachstehenden Beschreibung anhand der Zeichnungen noch näher erläutert. Es zeigen:

Fig. 1 einen Schnitt durch zwei nebeneinander liegende Kompostierfelder, welche in einer überdachten Halle angeordnet sind;

Fig. 2 eine Draufsicht auf diese Kompostierfelder in gegenüber Fig. 1 verkleinertem Maßstab;

Fig. 3 eine Seitenansicht der erfindungsgemäßen Einrichtung und

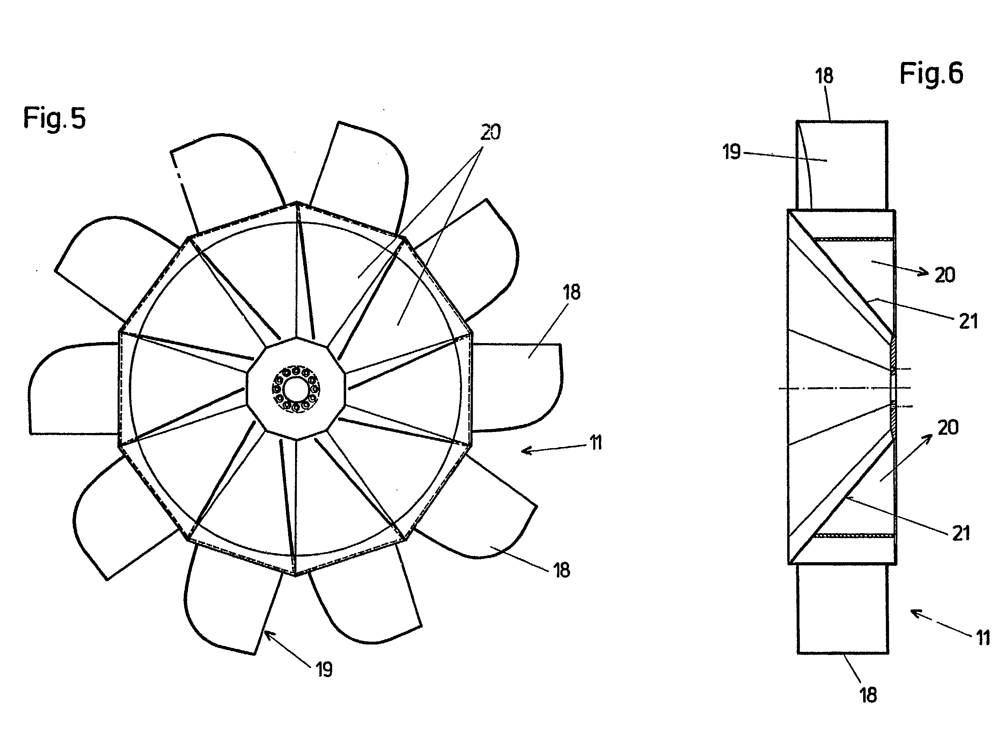

Fig. 4 eine Draufsicht;

Fig. 5 eine Seitenansicht des Grab- und Förderrades und

Fig. 6 einen Schnitt durch dieses Grab- und Förderrad, die

Fig. 7 und 8 zwei gegenüber Fig. 1 vergrößerte Darstellungen der Leitbleche zwischen Grab- und Förderrädern und Förderband.

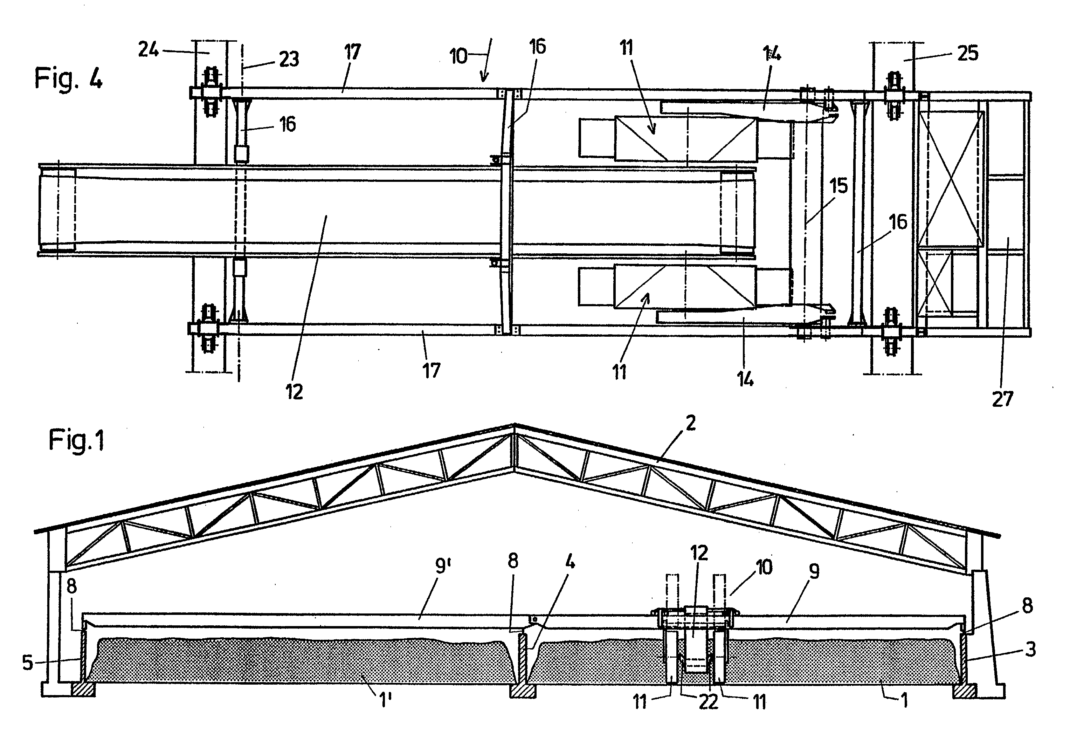

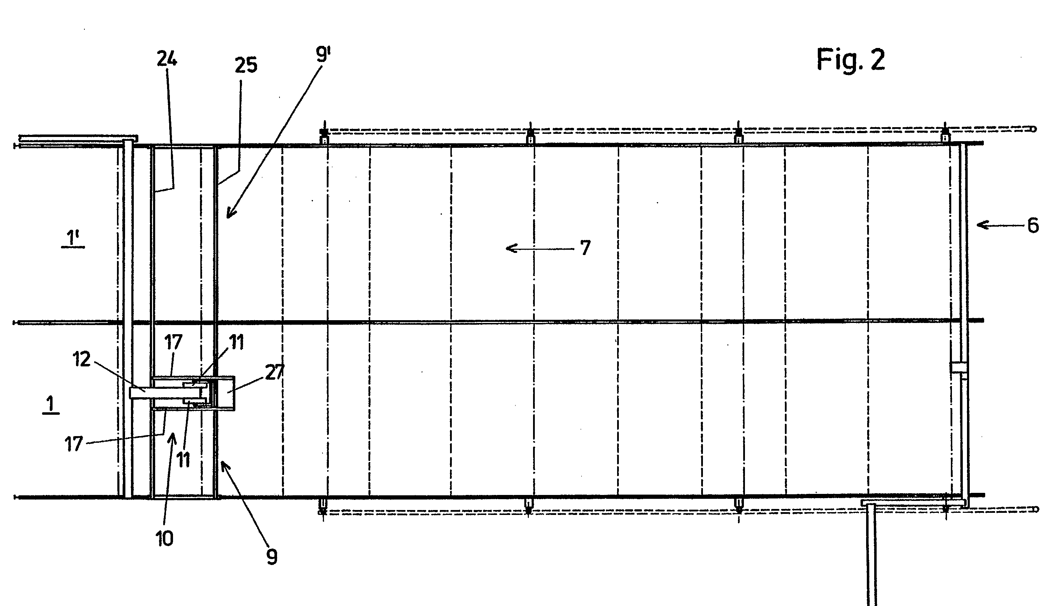

Anhand der Fig. 1 und 2 soll der grundsätzliche Aufbau einer Einrichtung zum Umsetzen von Müll auf einem Kompostierfeld erläutert werden. Bei der gezeigten Anordnung sind zwei Kompostierfelder 1 und 1' nebeneinander angeordnet und mit einer Überdachung 2 abgedeckt. Die Kompostierfelder 1 und 1' sind durch Wandteile 3,4 und 5 voneinander getrennt bzw. seitlich abgegrenzt. An der Eintrittsseite 6 eines Kompostierfeldes 1, 1' wird der anfallende Müll abgeladen bzw. aufgeschüttet, wobei eine über die ganze Breite eines Kompostierfeldes 1 bzw. 1' verlaufende Miete gebildet wird. Diese Mieten werden in regelmäßigen Abständen umgesetzt, das heißt, das angeschüttete Material wird in regelmäßigen Abständen in Pfeilrichtung 7 immer weiter in Richtung zum Ausgangsende eines Kompostierfeldes umgesetzt, so daß eine ständige Umarbeitung des Mülls bzw. des Kompostes erfolgen kann. Der Rotteprozeß wird dadurch wesentlich beschleunigt, wobei eine kontrollierte Belüftung, Befeuchtung und eine gute Durchmischung erfolgen können. Die für eine solche Einrichtung vorgesehenen zusätzlichen Belüftungs- und Befeuchtungseinrichtungen sind der Übersichtlichkeit halber hier nicht dargestellt worden.

Eine solche Rottemiete wird beispielsweise pro Umsetzvorgang um zirka 5 Meter weitertransportiert, wobei die Zufuhr von Rohkompost bzw. der Abtransport von Fertigkompost in rythmischem Einklang mit der Rottezeit gebracht werden kann, so daß ein kontinuierlicher Materialfluß im gesamten Müllwerk gewährleistet ist.

Die Einrichtung zum Umsetzen des Mülls bzw. des Kompostes besteht aus einer auf Schienen 8 verfahrbaren Brücke 9, 9' und einer auf der Brücke 9, 9' verfahrbaren Laufkatze 10, an welcher zwei Grab- und Förderräder 11 sowie ein Förderband 12 angeordnet sind. Durch die Grab- und Förderräder wird der Müll bzw. der Kompost abgearbeitet und dem Förderband 12 zugeführt, über welches dann der abgearbeitete Müll an den um das entsprechende Maß weiter versetzten Ort abgeladen wird.

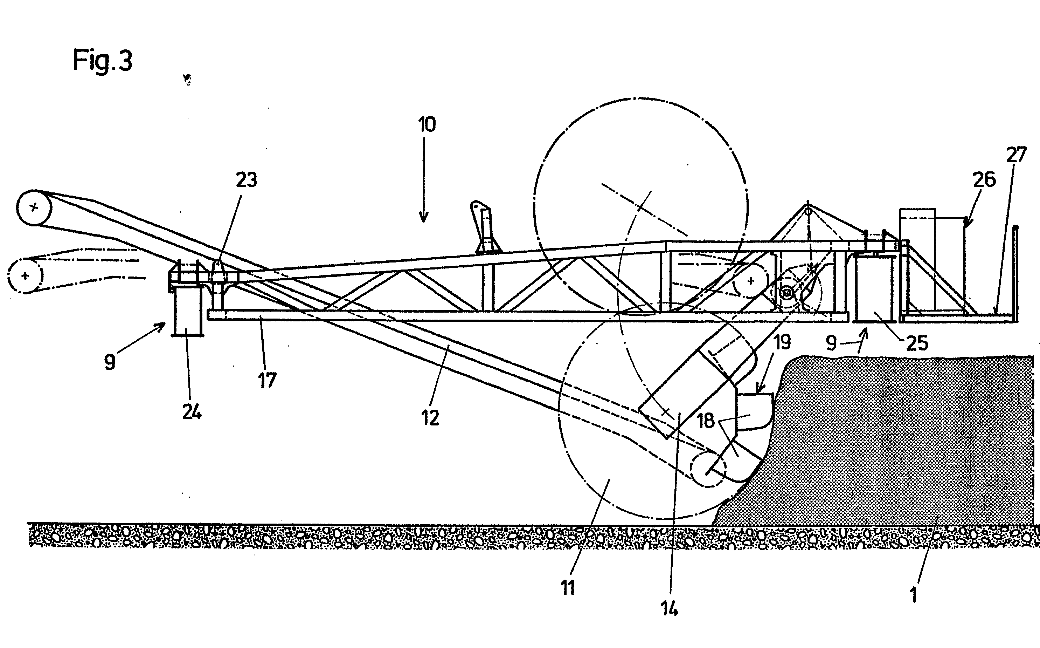

Gemäß der vorliegenden Erfindung sind nun zwei Grab- und Förderräder 11 mit Abstand zueinander gleichachsig angeordnet und weisen gegeneinander gerichtete Austrittsöffnungen 20 auf. Im Bereich zwischen den beiden Grab- und Förderrädern 11 ist ein Förderband 12 vorgesehen, so daß das abgearbeitete Material von beiden Förderrädern 11 her zur Mitte hin auf das Förderband 12 entladen werden kann. Sowohl die Grab- und Förderräder 11 als auch das Förderband 12 sind höhenverstellbar an der auf der Brücke 9, 9' verfahrbaren Laufkatze 10 gehalten, wobei diese oberste Stellung der Grab- und Förderräder 11 sowie des Förderbandes 12 strichpunktiert in den Figuren 1 und 3 ersichtlich ist.

Die Grab- und Förderräder 11 sind am freien Ende von Tragarmen 14 drehbar gelgert, wobei beide Tragarme 14 um eine gemeinsame horizontale Achse 15 an der Laufkatze 10 verschwenkbar gehalten sind. Es ist dadurch eine sehr einfache Höhenverstellbarkeit gewährleistet, ohne daß viele zusätzliche konstruktive Maßnahmen getroffen werden müßten.

In besonders einfacher Weise besteht die Laufkatze 10 aus zwei mit Abstand voneinander verlaufenden und über Querstreben 16 miteinander verbundenen Trägern 17, wobei die Lagerung der Tragarme 14 an diesen Trägern 17 erfolgen kann. Durch die Anordnung der Grab- und Förderräder 11 an diesen Tragarmen 14 ist eine fliegende Lagerung der Grab- und Förderräder 11 möglich, so daß eine sehr wirkungsvolle Entleerung des abgearbeiteten Materials zur freien Seite hin und somit zum Förderband 12 hin möglich ist.

Die Konstruktion eines solchen Grab- und Förderrades 11 kann im Detail den Figuren 5 und 6 entnommen werden. Am Umfang verteilt sind eine Vielzahl von Grabschaufeln 18 vorgesehen, die das Material abarbeiten und über einen bestimmten Verdrehwinkel mitführen. Die Schaufelöffnungen 19 erstrecken sich bis praktisch zur Radachse hin und gehen dort in die Austrittsöffnungen 20 über. Die Schaufelöffnungen 19 sind praktisch der Radachse zugewandt mit schräg zur Radachse hin abfallenden Begrenzungsflächen 21 abgegrenzt. Die Austrittsöffnungen 20 sind zumindest über einen Teilbereich dieser schräg abfallenden Begrenzungsflächen 21 vorgesehen, so daß das abgearbeitete Material durch die Schaufelöffnungen 19 in den durch die Begrenzungsflächen 21 abgegrenzten Schacht fallen und von dort über die Austrittsöffnungen 20 auf das Förderband 12 gelangt.

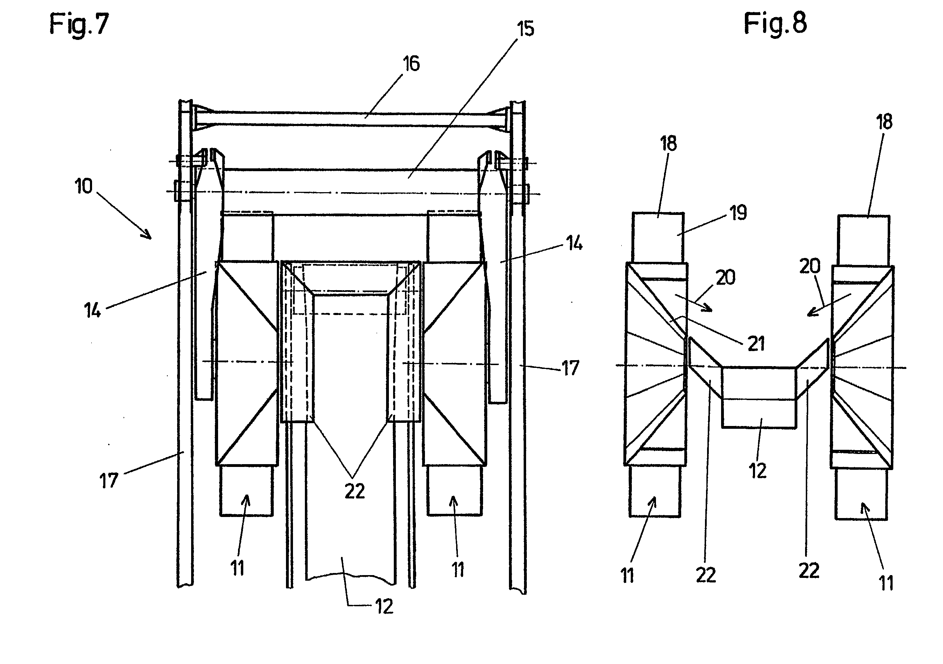

Das Förderband 12 und die Grab- und Förderräder 11 können relativ eng aneinander anschließen, so daß die Gewähr gegeben ist, daß das über die Austrittsöffnungen 20 zugeführte Material direkt auf dem Förderband 12 landet. Es besteht aber auch die Möglichkeit, zumindest am Übergangsbereich zwischen den Austrittsöffnungen 20 der Grab- und Förderräder 11 und dem Förderband rinnen- oder trichterförmig angeordnete Leitbleche 22 /Fig. 1,7,8) vorzusehen. Diese Leitbleche 22 können sich aber auch über die ganze Länge des Förderbandes erstrecken.

Das Förderband 12 ist an der Laufkatze 10 um eine horizontale Achse 23 verschwenkbar gehalten. Das Verschwenken des Förderbandes 12 kann dabei unabhängig von dem Verschwenkzustand der Tragarme 14 für die Grab- und Förderräder 11 erfolgen. Es können also sowohl die Grab- und Förderräder 11 als auch das Förderband 12 so weit angehoben werden, daß sie oberhalb der Fahrebene der Laufkatze 10 liegen bzw. zumindest oberhalb des untersten Abschnittes der Träger 17.

Das Förderband 12 ragt mit seinem auswurfsseitigen Ende zwischen zwei die Brücke 9, 9' bildenden Trägern 24 und 25 nach oben und übergreift dabei den einen Träger 24. Erst durch diese Maßnahme ist es möglich, daß auch das Förderband 12 über die unterste Begrenzung des Trägers 17 nach oben verschwenkt werden kann.

Daraus ergibt sich auch eine sehr günstige Arbeitsweise mit einer erfindungsgemäßen Einrichtung, weil nämlich die Brücke 9, 9' über mehrere, nebeneinander liegende Kompostierfelder 1, 1' führen kann, wobei die Laufkatze 10 mit hochgestellten Grab- und Förderrädern 11 und hochgestelltem Förderband 12 über die Wandteile 4 zwischen zwei Kompostierfeldern 1, 1' verfahrbar ist. An jeder beliebigen Stelle können also die Grab- und Förderräder 11 und das Förderband 12 angehoben und zum gewünschten Kompostierfeld 1 bzw. 1' verfahren werden. Durch diese höhenverstellbare Halterung ist aber auch ein Überfahren des Kompostierfeldes in dessen Längsrichtung in jeder beliebigen Situation möglich.

In der vorstehenden Beschreibung wurde stets davon gesprochen, daß die Grab- und Förderräder 11 und das Förderband 12 um eine entsprechende Achse verschwenkbar gehalten sind. Es wäre im Rahmen der Erfindung auch möglich, auf eine andere Weise eine Höhenverstellung der Grab- und Förderräder bzw. des Förderbandes durchzuführen und diese Teile z.B. in vertikalen Führungen zu halten.

Durch die erfindungsgemäße Einrichtung ist eine schonende Behandlung des Mülls bzw. Kompostes möglich, da die Grab- und Förderräder 11 nur eine geringe Drehzahl aufweisen müssen, z.B. 10 U/min. Dadurch ist keine Zerstörung von Monozellen, Medikamentenbehältern usw., welche sich noch im Rohkompost befinden können, möglich. Dies ergibt also einen sauberen Fertigkompost.

Die Träger 17 können je nach Bedarf konstruiert und sind beim gezeigten Beispiel als Fachwerkträger ausgeführt. Die Anordnung der Hydraulikeinheiten 26 oder anderer Antriebs- oder Steuereinheiten kann beispielsweise auf einem Podest 27 erfolgen, das an einem den Träger 25 der Brücke 9, 9' übergreifenden Abschnitt der Laufkatze 10 angeordnet wird. Verschiedene konstruktive Details können selbstverständlich in verschiedenen Ausführungen durchgeführt werden, wobei es jedoch immer wesentlich und wichtig ist, daß zwei Grab- und Förderräder 11 mit Abstand voneinander angeordnet sind und zwischen diesen beiden Grab- und Förderrädern ein Förderband 12 angeordnet wird. Ferner ist ein wesentliches Kriterium, daß diese Teile höhenverstellbar an der Laufkatze 10 gehalten sind.

## Patentansprüche

1. Einrichtung zum Umsetzen von Müll auf einem Kompostierfeld, bei der Müll an der Eintrittsseite abgeladen und fortschreitend bis zur Austrittsseite des Kompostierfeldes umgesetzt wird, bestehend aus einer auf Schienen verfahrbaren Brücke und einer auf der Brücke verfahrbaren Laufkatze, welche wenigstens ein Grab- und Förderrad und ein Förderband trägt, dadurch gekennzeichnet, daß zwei Grab- und Förderräder (11) mit Abstand zueinander gleichachsig angeordnet sind, welche in Achsrichtung gegeneinander gerichtete Austrittsöffnungen (20) aufweisen, daß in den Bereich zwischen den beiden Grab- und Förderrädern (11) ein Förderband (12) eingreift, und daß sowohl die Grab- und Förderräder (11) als auch das Förderband (12) höhenverstellbar an der auf der Brücke (9, 9') verfahrbaren Laufkatze (10) gehalten sind.

2. Einrichtung nach Anspruch 1, dadurch gekennzeichnet, daß die Grab- und Förderräder (11) am freien Ende von Tragarmen (14) gelagert sind und beide Tragarme (14) um eine gemeinsame horizontale Achse (15) an der Laufkatze (10) verschwenkbar gehalten sind.

3. Einrichtung nach Anspruch 2, dadurch gekennzeichnet, daß die Tragarme (14) an zwei mit Abstand voneinander verlaufenden und über Querstreben (16) miteinander verbundenen Trägern (17) der Laufkatze (10) schwenkbar gelagert sind.

4. Einrichtung nach den Ansprüchen 1 bis 3, dadurch gekennzeichnet, daß die Grab- und Förderräder (11) an den Tragarmen (14) fliegend gelagert sind.

5. Einrichtung nach Anspruch 1 und einem der vorhergehenden Ansprüche, dadurch gekennzeichnet, daß die Grab- und Förderräder (11) in an sich bekannter Weise als Schaufelräder ausgebildet sind, wobei sich die Schaufelöffnungen (19) bis zur Radachse hin erstrecken und dort schräg zur Radachse hin abfallende Begrenzungsflächen aufweisen, wobei die Grab- und Förderräder (11) zumindest im Bereich der schräg abfallenden Begrenzungsflächen (21) nach dieser einen Seite hin offen sind.

6. Einrichtung nach Anspruch 1 und einem der vorhergehenden Ansprüche, dadurch gekennzeichnet, daß zumindest am Übergangsbereich zwischen Auswurfseite der Grab- und Förderräder (11) und dem Förderband (12) rinnen- oder trichterförmig angeordnete Leitbleche (22) vorgesehen sind.

7. Einrichtung nach Anspruch 1 und einem der vorhergehenden Ansprüche, dadurch gekennzeichnet, daß das Förderband (12) an der Laufkatze (10) um eine horizontale Achse (23) unabhängig von den Grab- und Förderrädern (11) verschwenkbar gehalten ist.

8. Einrichtung nach den Ansprüchen 1 und 7, dadurch gekennzeichnet, daß das auswurfsseitige Ende des Förderbandes (12) zwischen zwei Trägern (24, 25) der von der Laufkatze (10) befahrenen Brücke (9, 9') nach oben ragt und einen der Träger (24) übergreift.

9. Einrichtung nach den Ansprüchen 1,2 und 7, dadurch gekennzeichnet, daß die Grab- und Förderräder (11) und das Förderband (12) über die Fahrebene der Laufkatze (10) bzw. die unterste Begrenzung der Konstruktionsteile der Laufkatze (10) anhebbar bzw. nach oben verschwenkbar sind.

10. Einrichtung nach Anspruch 1 und einem der vorhergehenden Ansprüche, dadurch gekennzeichnet, daß die Brücke (9, 9') mehrere, nebeneinander liegende Kompostierfelder (1, 1') überspannt, wobei die Laufkatze (10) mit hochgestellten Grab- und Förderrädern (11) und hochgestelltem Förderband (12) über Wandteile (4) zwischen zwei Kompostierfeldern (1, 1') verfahrbar ist.

## Claims

1. A device for moving waste on a compost field, in which waste is unloaded at the entry side and is continuously moved until it reaches the exit side of the compost field, comprising a bridge which can be driven on rails and a travelling trolley which can be driven along the bridge and which supports at least one digging and conveying wheel and a conveyor belt, characterised in that two digging and conveying wheels (11) are arranged coaxially and spaced apart and comprise outlet openings (20) facing one another in the axial direction, in that a conveyor belt (12) engages in the region between the two digging and conveying wheels (11) and in that both the digging and conveying wheels (11) and the conveyor belt (12) are mounted in a height-adjustable manner on the travelling trolley (10) which is desplaceable along the bridge (9, 9').

2. A device according to claim 1, characterised in that the digging and conveying wheels (11) are mounted at the free end of support arms (14) and both support arms (14) are mounted on the travelling trolley (10) so as to be pivotable about a common horizontal axis (15).

3. A device according to claim 2, characterised in that the support arms (14) are pivotably mounted on two supports (17) of the travelling trolley (10), which supports extend at a distance from one another and are connected to one another by means of transverse struts (16).

4. A device according to claims 1 to 3, characterised in that the digging and conveying wheels (11) are taper-bore mounted on the digging and conveying wheels (11) are taper-bore mounted on the support arms (14).

5. A device according to claim 1 and any one of the preceding claims, characterised in that the digging and conveying wheels (11) are designed in a manner known per se as bucket wheels, the bucket openings (19) extending as far as the wheel axis and comprising limiting surfaces which are inclined in the direction of the wheel axis, the digging and conveying wheels (11) being upen at least in the region of the inclined limiting surfaces (21) towards this side.

6. A device according to claim 1 and any one of the preceding claims, characterised in that guide plates (22) are arranged in the shape of channels or funnels at least at the transition region between the outlet side of the digging and conveying wheels (11) and the conveyor belt (12).

7. A device according to claim 1 and any one of the preceding claims, characterised in that the conveyor belt (12) is mounted on the travelling trolley (10) so as to be pivotable about a horizontal axis (23) independently of the digging and conveying wheels (11).

8. A device according to claims 1 and 7, characterised in that the end at the outlet side of the conveyor belt (12) projects upwards between two supports (24, 25) of the bridge (9, 9') along which the travelling trolley (10) travels and overlaps one support (24).

9. A device according to claims 1, 2 and 7, characerised in that the digging and conveying wheels (11) and the conveyor belt (12) can be lifted or swung upwards above the plane of travel of the travelling trolley (10) or above the lowermost boundary of the structural members of the travelling trolley (10).

10. A device according to claim 1 and any one of the preceding claims, characterised in that the bridge (9, 9') covers a plurality of adjacent compost fields (1, 1'), it being possible to displace the travelling trolley (10) with raised digging and conveying wheels (11) and raised conveyor belt (12) over wall parts (4) between two compost fields (1, 1').

**Revendications**

1. Dispositif pour transformer des ordures sur un terrain de compostage dans lequel les ordures déchargées du côté de l'entrée sont transformées en avançant jusqu'au côté de sortie du champ de compostage, constitué d'un pont pouvant se déplacer sur des rails et d'un chariot roulant pouvant se déplacer sur le pont, qui porte au moins une roue excavatrice et de transport et une bande transporteuse, caractérisé en ce que deux roues excavatrices et de transport (11) sont disposées sur le même axe à une certaine distance l'une de l'autre et présentent des orifices de sortie (20) tournés l'un vers l'autre dans la direction axiale, en ce que, dans la zone entre les deux roues excavatrices et de transport (11), vient s'insérer une bande transporteuse (12) et en ce que, tant les roues excavatrices et de transport (11) que la bande transporteuse (12) sont fixées avec possibilité de réglage en hauteur, sur le chariot roulant (10) pouvant se déplacer sur le pont (9, 9').

2. Dispositif selon la revendication 1, caractérisé en ce que les roues excavatrices et de transport (11) sont montées à l'extrémité libre de bras de support (14) et que les deux bras de support (14) sont fixés, avec possibilité de pivotement, autour d'un axe horizontal commun (15) sur le chariot roulant (10).

3. Dispositif selon la revendication 2, caractérisé en ce que les bras de support (14) sont montés, avec possibilité de pivotement, sur deux supports (17) du chariot roulant (10) reliés l'un à l'autre par des traverses (16) et disposés à une certaine distance l'un de l'autre.

4. Dispositif selon les revendications 1 à 3, caractérisé en ce que les roues excavatrices et de transport (11) sont montées en porte-à-faux sur les bras de support (14).

5. Dispositif selon la revendication 1 et l'une des revendications précédentes, caractérisé en ce que les roues excavatrices et de transport (11) sont constituées, d'une manière connue en soi, de roues à godets, tandis que les ouvertures des godets (19) s'étendent jusqu'à l'axe de la roue et présentent des surfaces de limitation qui descendent obliquement jusqu'à l'axe de la roue, tandis que les roues excavatrices et de transport (11) sont ouvertes au moins dans la zone des surfaces de limitation descendant obliquement (21) vers ce même côté.

6. Dispositif selon la revendication 1 et l'une des revendications précédentes, caractérisé en ce que des tôles de guidage (22) en forme de rigole ou d'entonnoir sont prévues au moins dans la zone de transition entre le côté de sortie des roues excavatrices et de transport (11) et la bande transporteuse (12).

7. Dispositif selon la revendication 1 et l'une des revendications précédentes, caractérisé en ce que la bande transporteuse (12) est montée sur le chariot roulant (10) pouvant pivoter autour de l'axe horizontal (23) indépendamment des roues excavatrices et de transport (11).

8. Dispositif selon les revendications 1 et 7, caractérisé en ce que l'extrémité du côté de la sortie de la bande transporteuse (12) monte entre deux supports (24, 25) du pont (9, 9') pouvant être déplacé par le chariot roulant (10) et surplombe l'un des supports (24).

9. Dispositif selon les revendications 1, 2 et 7, caractérisé en ce que les roues excavatrices et de transport (11) et la bande transporteuse (12) peuvent pivoter vers le haut et peuvent être soulevées au-dessus du plan de roulement du chariot roulant (10) ou de la limite inférieure des éléments de construction du chariot roulant (10).

10. Dispositif selon la revendication 1 et l'une des revendications précédentes, caractérisé en ce que la pont (9, 9') s'étend par-dessus plusieurs terrains de compostage (1, 1') disposés les uns à côté des autres, tandis que le chariot roulant (10) peut se déplacer entre deux champs de compostage avec les roues excavatrices et de transport (11) relevées et la bande transporteuse (12) relevée, en passant par-dessus des éléments de parois (4).

Fig. 4

24    23    17    10    16    11    14    25

16

15

16

12    17    11    14    27

EP 0 250 617 B1

Fig.1

2

9'    8    4    12    10    9

8

8

5

1'    11    22    11    1

3

Fig. 2

Fig.3

EP 0 250 617 B1

Fig.6

Fig.5

Fig.7

Fig.8

EP 0 250 617 B1